# EUROPÄISCHE PATENTSCHRIFT

(11) **EP 1 278 988 B1**
(45) Veröffentlichungstag und Bekanntmachung des Hinweises auf die Patenterteilung: **26.10.2011**
(21) Anmeldenummer: 01943006.5
(22) Anmeldetag: 03.05.2001
(51) Int. Cl.: F21V 7/00

(54) **FACETTIERTER REFLEKTOR**
FACETED REFLECTOR
REFLECTEUR A FACETTES

(30) Priorität: 04.05.2000 DE 10021725
(43) Veröffentlichungstag der Anmeldung: 29.01.2003
(73) Patentinhaber: OSRAM Opto Semiconductors GmbH, 93055 Regensburg (DE)
(72) Erfinder: BLÜMEL, Simon, 84069 Schierling (DE)
(74) Vertreter: Epping - Hermann - Fischer
(86) Internationale Anmeldenummer: PCT/DE2001/001676
(87) Internationale Veröffentlichungsnummer: WO 2001/084045

(56) Entgegenhaltungen:
- EP-A- 0 911 574
- WO-A-00/17477
- WO-A-97/26573
- WO-A1-96/31742
- WO-A1-96/31742
- WO-A1-98/17889
- WO-A1-98/17889
- DE-A1- 19 622 670
- DE-A1- 19 622 670
- DE-A1- 19 637 199
- DE-A1- 19 637 199
- GB-A- 1 051 440
- US-A- 737 979
- US-A- 737 979
- US-A- 3 453 039
- US-A- 3 453 039
- US-A- 4 690 490
- US-A- 4 989 952
- US-A- 4 989 952
- US-A- 5 117 478
- US-A- 5 335 151
- US-A- 5 880 886
- US-A- 5 890 796

## Beschreibung

Die Erfindung betrifft einen facettierten Reflektor nach dem oberbegriff des Patentanspruchs 1.

Facettierte Reflektoren sind beispielsweise aus US 4 351 019 bekannt. Darin ist ein Reflektor für eine lineare Abtastlichtquelle gezeigt, der auf seiner Oberfläche in verschiedene Einzelreflektoren in Form von streifenartigen Facetten geteilt ist. Die einzelnen Facetten dienen dazu, die lineare Lichtquelle auf verschiedene Bereiche einer abzutastenden Fläche abzubilden. Solche Reflektoren werden beispielweise in Fotokopiergeräten eingesetzt.

Andererseits können facettierte Reflektoren auch zu Beleuchtungszwecken, zum Beispiel im Straßenverkehr oder an Gebäuden verwendet werden. Hier besitzen facettierte Reflektoren der genannten Art den Nachteil, daß die Reflektorstreifen auf der Oberfläche des Reflektors ausgebildet sind. Dadurch entsteht eine stark strukturierte, mit zahlreichen Einkerbungen versehene Fläche, die stark verschmutzungsanfällig und schwer zu reinigen ist. Dies ist insbesondere von Nachteil, wenn der facettierte Reflektor der freien Witterung ausgesetzt ist. Ein für diese Zwecke geeigneter Reflektor sollte an seinen Außenfläche möglichst frei von Strukturierungen sein. Weiterhin sollten solche Reflektoren kostengünstig herstellbar sein, da sie bei Verwendung für Markierungszwecke im Straßenverkehr in großen Stückzahlen benötigt werden.

In den Druckschriften US 5,890,796 und DE 698 33 421 T2 sind Vorrichtungen für die Fahrzeugbeleuchtung beschrieben.

Die Druckschrift US 4,690,490 befasst sich mit Linkablenkeinrichtungen für die Einkopplung in Lichtleiter.

Aus den Druckschriften US 4,989,952, DE 196 37 199 A1, WO 98/17889, US 737,979, US 3,453,039 und DE 196 22 670 A1 sind Lichtleitplatten bekannt, an denen beispielsweise Sonnenlicht umgelenkt wird.

Die Druckschrift WO 96/31742 betrifft eine kollimierende Linse, die Totalreflexion zwischen einer Lichteintrittsfläche und einer Lichtaustrittsfläche nutzt.

Es ist Aufgabe der vorliegenden Erfindung, einen facettierten Reflektor zu schaffen, dessen Außenfläche keine Reflexionsstrukturen aufweisen und der vorzugsweise kostengünstig herstellbar ist. Weiterhin ist es Aufgabe der Erfindung, ein Herstellungsverfahren und Beleuchtungsanordnungen für den Reflektor anzugeben.

Diese Aufgabe wird durch den Gegenstand der unabhängigen Ansprüche gelöst. Vorteilhafte Weiterbildungen der Erfindung sind Gegenstand der abhängigen Ansprüche.

Erfindungsgemäß ist vorgesehen, die Einzelreflektoren (Facetten) in einen strahlungsdurchlässigen oder strahlungsteildurchlässigen Träger einzubetten. Der Träger weist eine erste und eine zweite Hauptfläche auf, wobei die zu reflektierende Strahlung, im allgemeinen sichtbares Licht, durch die erste Hauptfläche (Eintrittsfläche) in den Träger eintritt, an den Einzelreflektoren reflektiert wird und den Träger durch die zweite Hauptfläche (Austrittsfläche) wieder verläßt. Dabei ist der Träger in Strahlungsrichtung einstückig ausgebildet, so daß für die zu reflektierenden Strahlung oder zumindest Teile davon der optische Weg innerhalb des Trägers (abgesehen von der Umlenkung an den Einzelreflektoren) frei von Grenzflächen ist. Durch die einstückige Ausführung des Trägers in Strahlungsrichtung werden zusätzliche unerwünschte Reflexionen im Träger vermieden.

Da die Einzelreflektoren im Inneren des Träger angeordnet sind, können die Ein- und Austrittsfläche des Trägers strukturlos glatt ausgebildet sein. Der Vorteil dieser Ausführung liegt darin, daß eine unstrukturierte Fläche wesentlich weniger verschmutzungsanfällig ist als eine strukturierte Fläche und gegebenenfalls leichter zu reinigen ist.

Die Einzelreflektoren sind durch Hohlräume innerhalb des Reflektors gebildet. Da der Übergang vom Trägermaterial in den Hohlraum einen Übergang von einem optisch dichteren Medium in ein optisch dünneres Medium darstellt, tritt an der Grenzfläche zwischen Träger und Hohlraum Totalreflexion auf, wenn der Einfallswinkel der Strahlung, bezogen auf die Grenzflächennormale, größer als der Totalreflexionswinkel ist. Somit wirken die Hohlräume im Träger als Reflektoren, die eine verlustfreie Umlenkung der Strahlung ermöglichen. Vorteilhafterweise werden keine zusätzlichen Elemente für die Einzelreflektoren benötigt.

Eine weitere besonders bevorzugte Ausführungsform besteht darin, die Hohlräume prismenförmig auszubilden. Dabei wirken Teilbereiche der Prismenmantelfläche als streifenförmige Totalreflektoren, so daß die Gesamtheit dieser prismatischen Einzelreflektoren vorteilhafterweise einen flächigen Reflektor darstellt. Dies wird insbesondere **dadurch erreicht, daß** die prismatischen Hohlräume bezüglich der Prismenkanten parallel zueinander angeordnet sind. Als Prismenkanten sind hier und im folgenden die Kanten der Prismenmantelfläche zu verstehen. Ein weiterer Vorteil bei der Ausbildung prismatischer Hohlräume besteht darin, daß die Herstellung solcher Hohlräume mittels eines Gußverfahrens besonders einfach ist.

Bei einer weiteren vorteilhaften Ausführungsform sind die Hohlräume als Dreikantprismen ausgebildet. Diese Ausgestaltung verwendet für die Hohlkörper die einfachste Prismenform und stellt damit auch eine besonders kostengünstige Ausführungsform der Erfindung dar.

zugleich ermöglicht diese Ausführung eine Reflexion ohne Abschattung der Einzelreflektoren untereinander und zugleich möglichst große Hohlräume, so daß vorteilhafterweise Materialaufwand und Masse des facettierten Reflektors gering gehalten sind.

Die Hohlräume sind vollständig vom Trägermaterial umgeben, wodurch keine Verbindung zur Umgebung besteht. Dies verhindert mit Vorteil das Eindringen von Feuchtigkeit und Verschmutzung in die Hohlräume, die bei Ablagerung an den reflektierenden Grenzflächen die Totalreflexion stören und damit die Effizienz des facettierten Reflektors mindern können.

Bei einer weiteren vorteilhaften Ausführungsform wird als Trägermaterial ein transparenter oder semitransparenter Kunststoff verwendet. Aufgrund der guten Formbarkeit von Kunststoffen können die erfindungsgemäßen Reflexionsstrukturen im Inneren eines Kunststoffträgers leicht ausgebildet werden. Ein weiterer Vorteil besteht darin, daß durch Einfärben der Kunststoffe ohne besonderen Aufwand die Farbe des von dem Reflektor abgestrahlten Lichts modifiziert werden kann.

Bei einer vorteilhaften Weiterbildung der Erfindung ist auf der Eintrittsseite des facettierten Reflektors eine Lichtquelle angeordnet. Bei einem so gebildeten Leuchtkörper erfüllt der Reflektor mit Vorteil zwei Funktionen, da er das von der Lichtquelle erzeugte Licht umlenkt und zugleich die Lichtquelle in Emissionsrichtung abdeckt. Letztere Funktion wird dadurch ermöglicht, daß die Einzelreflektoren zwischen Ein- und Austrittsfläche des facettierten Reflektors angeordnet sind. Bei Reflektoren nach dem Stand der Technik hingegen ist die Eintrittsfläche zugleich auch Austrittsfläche, so daß solche Reflektoren in Abstrahlrichtung der Lichtquelle nicht als Abdeckung verwendet werden können.

Bei einer besonders bevorzugten Weiterbildung der Erfindung sind zwei facettierte Reflektoren an zwei Kanten der jeweiligen Eintrittsfläche winkelartig verbunden. Der so gebildete facettierte Reflektor lenkt das eingestrahlte Licht in zwei verschiedene Richtungen um. In Verbindung mit einer Lichtquelle ergibt sich damit ein Leuchtkörper, der mit Vorteil für eine zweiseitige Abstrahlung nur eine einzige Lichtquelle benötigt. Solche Leuchtkörper können im Straßenverkehr als Fahrbahnbegrenzung oder als Warnleuchte eingesetzt werden, wobei die beiden Abstrahlrichtungen in beide Fahrtrichtungen ausgerichtet sein können.
Weiterhin können solche Leuchtkörper als Fassadenbeleuchtung oder zur Illumination von Gebäudekanten verwendet werden.

Weitere Merkmale, Vorteile und Zweckmäßigkeiten ergeben sich aus der nachfolgenden Beschreibung von vier Ausführungsbeispielen in Verbindung mit den Figuren 1 bis 4.

Es zeigen:
Figur 1 eine schematische Schnittansicht eines ersten Ausführungsbeispiels eines erfindungsgemäßen facettierten Reflektors,
Figur 2 eine schematische Schnittansicht eines zweiten Ausführungsbeispiels eines erfindungsgemäßen facettierten Reflektors,
Figur 3 eine schematische Schnittansicht eines dritten Ausführungsbeispiels eines erfindungsgemäßen facettierten Reflektors und
Figur 4 eine schematische Schnittansicht eines vierten Ausführungsbeispiels eines erfindungsgemäßen facettierten Reflektors.

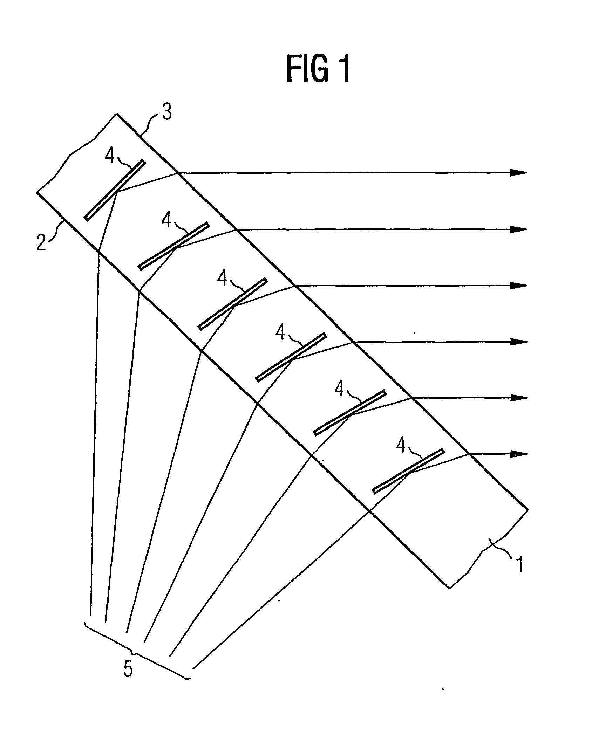

Der in Figur 1 gezeigte facettierte Reflektor besteht aus einem transparenten Träger 1 mit einer ersten Hauptfläche 2 und einer zweiten Hauptfläche 3. Die erste Hauptfläche 2 stellt dabei die Lichteintrittsseite und die zweite Hauptfläche 3 die Lichtaustrittsseite dar. Die zu reflektierenden Lichtstrahlen 5 treten auf der Eintrittsseite in den Träger 2 ein, werden an den Einzelreflektoren 4 umgelenkt und verlassen den Träger auf der Austrittsseite 3.

Der Träger selbst besteht aus einem transparenten Kunststoff, wie beispielsweise PMMA (Polymethacrylsäuremethylester)oder PC (Polycarbonat). Für den Einsatz in freier Umgebung ist es dabei günstig, UV-beständiges PMMA oder PC zu verwenden, um einer schnellen Vergilbung und Alterung des Trägermaterials vorzubeugen. Je nach Verwendung kann der Kunststoff eingefärbt sein, beispielsweise orange für den Einsatz als Fahrbahnrandmarkierung. Auch eine Ausführung des Trägers aus Glas, zum Beispiel Preßglas, wäre möglich.
Als Reflektoren können einerseits in Vergleichsbeispielen Metallstreifen in den Kunststoffträger eingebettet sein. Andererseits ist es, wie im folgenden beschrieben, besonders kostengünstig, die Reflektoren als Hohlräume in dem Träger auszubilden. Auch eine Kombination, bespielsweise Hohlräume mit metallisierten Grenzflächen, ist möglich.

Durch die Orientierung der einzelnen Reflektoren zueinander ist es möglich, die Form des abgestrahlten Lichtbündels zu gestalten. Bei dem in Figur 1 gezeigten Ausführungsbeispiel sind die Reflektoren gegeneinander leicht gedreht angeordnet, so daß ein eingangsseitig divergentes Lichtbündel ausgangsseitig annähernd in ein Parallelbündel transformiert wird. Alternativ kann durch eine entsprechende Anordnung der Einzelreflektoren der facettierte Reflektor zur Fokussierung oder Aufweitung des Lichtbündels verwendet werden.

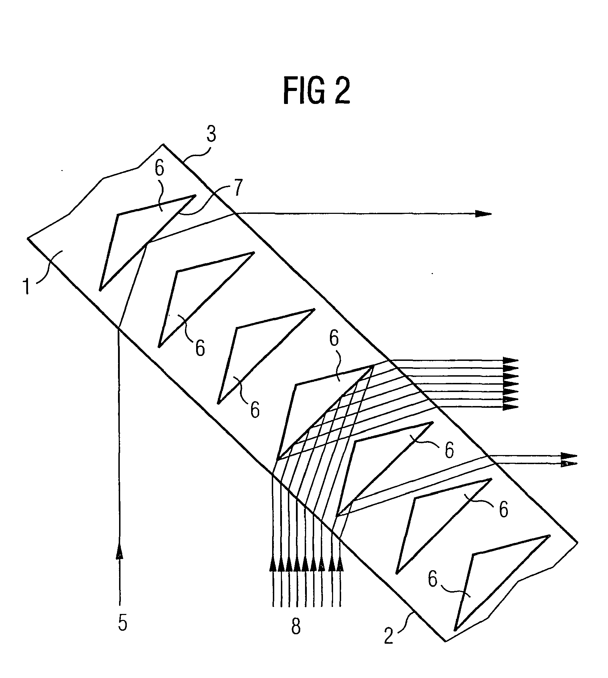

Bei dem in Figur 2 dargestellten Ausführungsbeispiel sind die Einzelreflektoren durch prismatische Hohlräume 6 mit dreiekkiger Grundfläche in dem Träger 1 gebildet. Ein zu reflektierender Lichtstrahl 5 tritt in den Träger ein, wird dabei an der Eintrittsfläche 2 gebrochen und trifft auf die Basisfläche 7 eines prismatischen Hohlraums. Da das Trägermaterial optisch dichter ist als der mit Luft gefüllte Hohlraum, wird Licht, dessen Einfallswinkel auf die Grenzfläche Trägermaterial-Hohlraum größer ist als der Totalreflexionswinkel, an der Grenzfläche vollständig reflektiert. Der totalreflektierte Lichtstrahl trifft danach unter einem Winkel, der kleiner ist als der Totalreflexionswinkel, auf die Austrittsfläche 3, wird dort wiederum gebrochen und verläßt den Träger 1.

Anhand des Strahlenbündels 8 zeigt sich, daß der Schattenraum zwischen zwei aufeinander folgenden Einzelreflektoren im Querschnitt annähernd ein Dreieck darstellt. Daher sind als Hohlräume Dreikantprismen, also Prismen mit dreieckiger Grundfläche, besonders vorteilhaft, da sie einerseits eine abschattungsfreie Reflexion gewährleisten und andererseits den Schattenraum weitgehend ausfüllen, so daß der facettierte Reflektor eine hohe Gesamtreflektivität besitzt und zugleich mit geringem Aufwand an Trägermaterial herstellbar ist. Dadurch wird folglich auch das Gewicht des Reflektors gering gehalten.

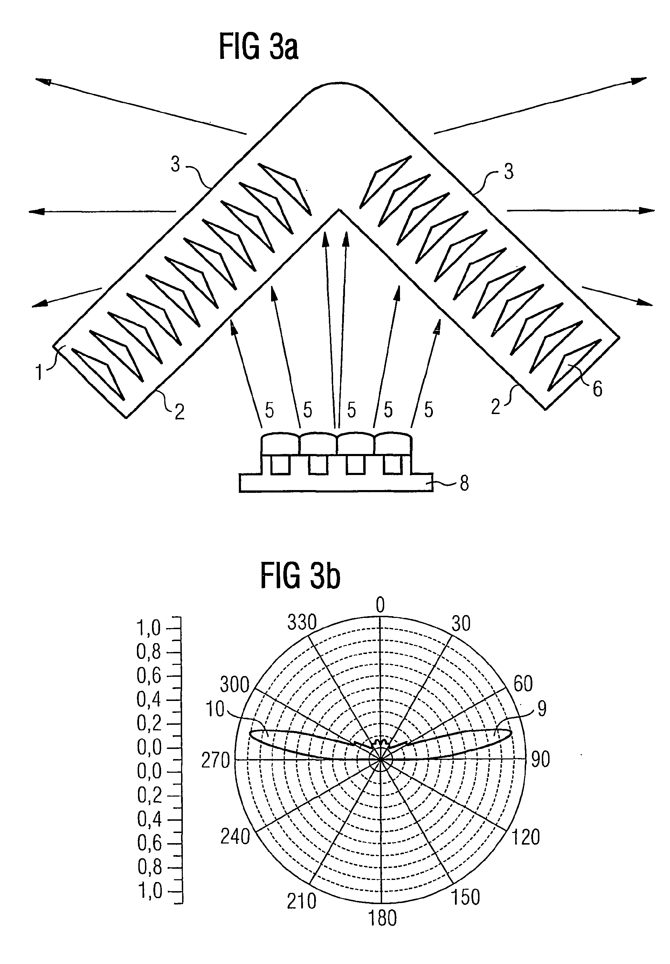

In Figur 3a ist eine Anordnung aus zwei facettierten Reflektoren gezeigt, die an einer Kante der jeweiligen Eintrittsfläche winkelartig verbunden sind. Die Reflektoren sind jeweils mit Einzelreflektoren in Form von Dreikantprismen 6 ausgebildet. Die Anordnung wird von einer einzigen Lichtquelle 8 beleuchtet. Hierfür eignet sich beispielsweise eine Leuchtdiode oder ein Leuchtdioden-Array. Für Beleuchtungsund Signalzwecke kann eine gewisse Aufweitung des Lichtbündels vorteilhaft sein, die beispielsweise durch eine Leuchtdiode mit Frontlinsenstruktur erzielt werden kann. Ebenso ist, wie bereits beschrieben, eine Formung des Lichtbündels durch eine spezielle Ausrichtung der Einzelreflektoren möglich.

Durch den winkelartigen Aufbau des Reflektors wird das eingestrahlte Licht in zwei Anteile geteilt, die in diametrale Richtungen abgestrahlt werden. Die Abstrahlcharakteristik eines solchen Reflektors in der gezeigten Schnittebene ist in Figur 3b dargestellt. Aufgetragen ist die relative Abstrahlstärke als Entfernung vom Koordinatenursprung für alle Richtungen in der Zeichenebene. Als Beleuchtung dient eine Lichtquelle mit einer Strahlaufweitung von etwa 10°. Das Licht wird, wie die beiden gleichartigen Strahlungskeulen 9 und 10 zeigen, zu gleichen Anteilen in entgegengesetzte Richtungen abgestrahlt, die miteinander etwa einen Winkel von 155° einschließen. Die Strahlaufweitung von 10° bleibt annähernd erhalten.

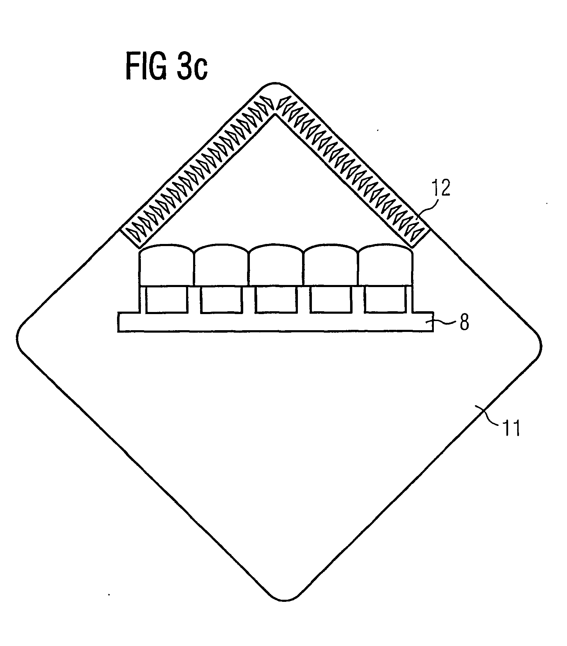

Vorteilhafterweise bildet diese Anordnung eines facettierten Reflektors zugleich eine Abdeckung der Lichtquelle in Emissionsrichtung. Für den Einsatz als selbstleuchtende Fahrbahnrandmarkierung kann eine solche Anordnung in eine Straßenrandmarkierungssäule eingebaut werden, wie Figur 3c im Schnitt zeigt. Solche Markierungssäulen bestehen üblicherweise aus einem rohrförmigen Hohlkörper 11 und können als Gehäuse für die Lichtquelle 8 verwendet werden. Abstrahlungsseitig ist in die Säule ein facettierter Reflektor 12 eingesetzt, der das von der Lichtquelle 8 erzeugte Licht in beide Fahrtrichtungen der zu begrenzenden Fahrbahn abstrahlt. Somit ist eine vollständige Einkapselung zum Schutz der Lichtquelle 8 gewährleistet. Aufgrund der glatten, unstrukturierten Einund Austrittsfläche ist der Reflektor auch bei rauhen Umgebungsbedingungen weitgehend gegen Verschmutzung resistent.

Diese Verschmutzungsfreiheit wird weiter erhöht, wenn die Hohlräume vollständig vom Trägermaterial umgeben sind, so daß keine Fremdstoffe wie beispielsweise Spritzwasser und Feuchtigkeit in die Hohlräume eindringen können, die das Reflexionsverhalten der Einzelreflektoren verschlechtern. Da solche abgeschlossenen Hohlräume im Rahmen eines Spritzgußverfahrens schwer herstellbar sind, ist ein zweiteiliger Aufbau des facettierten Reflektors vorteilhaft.

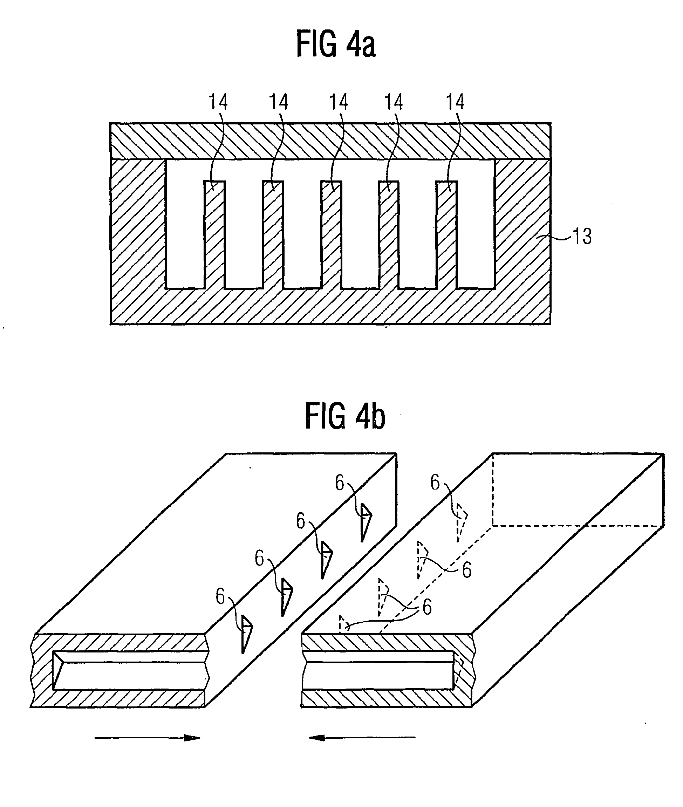

Eine solche Anordnung ist in Abbildung 4b dargestellt. Verwendet werden zwei facettierte Reflektoren mit prismatischen Hohlräumen, die in Richtung der Prismenkanten auf einer Seite abgeschlossen und auf der anderen Seite offen sind. Solche Reflektoren lassen sich leicht im Spritzgußverfahren herstellen. Dazu wird, wie Figur 4a zeigt, beispielsweise ein ZweiKomponenten-Spritzgußwerkzeug 13 mit einer Mehrzahl von fingerartigen Elementen 14 verwendet, die in das Gußteil hineinragen und so die Hohlräume 6 im Gußteil ausbilden. Die zwei facettierten Reflektoren werden mit den offenen Enden der Hohlräume zueinander ausgerichtet und aneinandergefügt, beispielsweise durch Verkleben oder Verschweißen. Der so gebildete facettierte Reflektor weist somit allseitig abgeschlossene Hohlräume auf und ist gleichzeitig leicht unter Verwendung eines Spritzgußverfahrens zu fertigen.

Die Erläuterung der Erfindung anhand der beschriebenen Ausführungsbeispiele ist natürlich nicht als Beschränkung.der Erfindung zu betrachten. Insbesondere können Form des Reflektorträgers sowie die Ausrichtung der Einzelreflektoren weitestgehend individuellen Gestaltungswünschen angepaßt werden.

## Patentansprüche

1. Facettierter Reflektor mit
- einem Träger (1), der eine erste Hauptfläche (2) und eine zweite Hauptfläche (3) aufweist, wobei die erste Hauptfläche (2) die Eintrittsfläche und die zweite Hauptfläche (3) die Austrittsfläche für die zu reflektierende Strahlung (5) bildet,
- einer Mehrzahl von Einzelreflektoren (4), die in den Träger (1) eingebettet und durch Hohlräume (6) im Träger (1) gebildet sind, wobei die zu reflektierende Strahlung (5) an einem Teil der Grenzflächen (7) dieser Hohlräume (6) totalreflektiert oder an metallisierten Grenzflächen der Hohlräume (6) reflektiert wird, und wobei die Hohlräume (6) vollständig von dem Träger (1) umschlossen sind,
**dadurch gekennzeichnet, daß**
der Träger (1) zumindest für einen Teil der zu reflektierenden Strahlung entlang des optischen Weges von der Eintrittsfläche zur Austrittsfläche einstückig gebildet ist, so dass der optische Weg von der Eintrittsfläche zur Austrittsfläche für die zu reflektierende Strahlung oder zumindest Teile davon abgesehen von der Umlenkung an den Einzelreflektoren frei von Grenzflächen ist.

2. Facettierter Reflektor nach Anspruch 1,
**dadurch gekennzeichnet, daß**
die zu reflektierende Strahlung (5) an einem Teil der Grenzflächen (7) dieser Hohlräume (6) totalreflektiert wird.

3. Facettierter Reflektor nach einem der vorhergehenden Ansprüche,
**dadurch gekennzeichnet, daß**
die Hohlräume (6) als Prismen ausgebildet sind.

4. Facettierter Reflektor nach Anspruch 3,
**dadurch gekennzeichnet, daß**
die Kanten der einzelnen prismatischen Hohlräume (6) parallel zueinander sind.

5. Facettierter Reflektor nach Anspruch 3 oder 4,
**dadurch gekennzeichnet, daß**
die Prismengrundflächen dreieckig sind.

6. Facettierter Reflektor nach einem der Ansprüche 1 bis 5,
**dadurch gekennzeichnet, daß**
die Flächen der Einzelreflektoren (4), an denen die Strahlung reflektiert wird, parallel zueinander sind.

7. Facettierter Reflektor nach einem der vorhergehenden Ansprüche,
**dadurch gekennzeichnet, daß**
als Material für den Träger (1) ein transparenter oder semitransparenter Kunststoff verwendet wird.

8. Anordnung zweier facettierter Reflektoren nach einem der vorhergehenden Ansprüche,
**dadurch gekennzeichnet, daß**
die beiden ersten Hautflächen (2) der beiden facettierten Reflektoren entlang einer Kante gewinkelt verbunden sind.

9. Anordnung mit einem facettierten Reflektor nach einem der Ansprüche 1 bis 7,
**dadurch gekennzeichnet, daß**
auf der Eintrittsseite des facettierten Reflektors eine Lichtquelle (8) angeordnet ist.

10. Anordnung nach Anspruch 8,
**dadurch gekenntzeichnet, daß**
im Innenbereich des von den beiden facettierten Reflektoren gebildeten Winkels eine Lichtquelle (8) angeordnet ist.

11. Anordnung nach Anspruch 9 oder 10,
**dadurch gekennzeichnet, daß**
als Lichtquelle (8) eine Leuchtdiode oder eine Mehrzahl von Leuchtdioden verwendet wird.

12. Verfahren zur Herstellung eines facettierten Reflektors nach einem der Ansprüche 1 bis 7,
**gekennzeichnet durch** die Schritte
- Bereitstellen einer Gußform mit einer Ausnehmung, in die zur Ausbildung von Hohlräumen in dem facettierten Reflektor eine Mehrzahl von vorspringende Elementen ragt,
- Befüllen der Ausnehmung mit einer strahlungsdurchlässigen Formmasse zur Ausbildung zumindest eines Teils des Trägers (1), wobei die Formmasse die vorspringenden Elemente zumindest teilweise umhüllt,
- Härten der Formmasse zum Trägermaterial,
- Entfernen der Gussform, und
- Fertigstellung des Trägers, so dass das Trägermaterial die Hohlräume vollständig umgibt.

13. Verfahren nach Anspruch 12,
**dadurch gekennzeichnet, daß**
die Gußform zweiteilig gebildet ist.

14. Verfahren nach Anspruch 12 oder 13,
**dadurch gekennzeichnet, daß**
es ein Spritzgruß- oder Spritzpreßverfahren ist.

15. Verwendung einer Anordnung nach einem der Ansprüche 9 bis 11 als selbstleuchtende Straßenmarkierung oder Fahrbahnrandmarkierung.

16. Verwendung einer Anordnung nach einem der Ansprüche 9 bis 11 als Fassadenbeleuchtung oder zur Beleuchtung von Gebäudekanten.

## Claims

1. Faceted reflector having
- a carrier (1), which has a first main area (2) and a second main area (3), the first main area (2) forming the entry area and the second main area (3) forming the exit area for the radiation (5) to be reflected,
- a plurality of individual reflectors (4), which are embedded in the carrier (1) and are formed by cavities (6) in the carrier (1), the radiation (5) to be reflected being subjected to total reflection at a part of the interfaces (7) of said cavities (6) or being reflected at metallized interfaces of the cavities (6), and the cavities (6) being completely enclosed by the carrier (1),
**characterized in that**
the carrier (1) is formed in one piece at least for a part of the radiation to be reflected along the optical path from the entry area to the exit area, such that the optical path from the entry area to the exit area for the radiation to be reflected or at least parts thereof, apart from the deflection at the individual reflectors, is free of interfaces.

2. Faceted reflector according to Claim 1,
**characterized in that**
the radiation (5) to be reflected is subjected to total reflection at a part of the interfaces (7) of said cavities (6).

3. Faceted reflector according to one of the preceding claims,
**characterized in that**
the cavities (6) are designed as prisms.

4. Faceted reflector according to Claim 3,
**characterized in that**
the edges of the individual prismatic cavities (6) are parallel to one another.

5. Faceted reflector according to Claim 3 or 4,
**characterized in that**
the prism base areas are triangular.

6. Faceted reflector according to one of Claims 1 to 5,
**characterized in that**
the areas of the individual reflectors (4) at which the radiation is reflected are parallel to one another.

7. Faceted reflector according to one of the preceding claims,
**characterized in that**
a transparent or semitransparent plastic is used as material for the carrier (1).

8. Arrangement of two faceted reflectors according to one of the preceding claims,
**characterized in that**
the two first main areas (2) of the two faceted reflectors are connected in an angled manner along an edge.

9. Arrangement having a faceted reflector according to one of Claims 1 to 7,
**characterized in that**
a light source (8) is arranged on the entry side of the faceted reflector.

10. Arrangement according to Claim 8,
**characterized in that**
a light source (8) is arranged in the inner region of the angle formed by the two faceted reflectors.

11. Arrangement according to Claim 9 or 10,
**characterized in that**
a light-emitting diode or a plurality of light-emitting diodes is used as light source (8).

12. Method for producing a faceted reflector according to one of Claims 1 to 7,
**characterized by** the steps of
- providing a casting mold with a recess into which a plurality of projecting elements protrudes for forming cavities in the faceted reflector,
- filling the recess with a radiation-transmissive molding compound for forming at least one part of the carrier (1), the molding compound at least partly encapsulating the projecting elements,
- curing the molding compound to form the carrier material,
- removing the casting mold, and
- completing the carrier, so that the carrier material completely surrounds the cavities.

13. Method according to Claim 12,
**characterized in that**
the casting mold is formed in two parts.

14. Method according to Claim 12 or 13,
**characterized in that** it is an injection molding
or transfer molding method.

15. Use of an arrangement according to one of Claims 9 to 11 as self-luminous road marking or roadway edge marking.

16. Use of an arrangement according to one of Claims 9 to 11 as facade illumination or for illuminating building edges.

## Revendications

1. Réflecteur taillé en facettes comprenant
- un support (1) qui présente une première surface principale (2) et une deuxième surface principale (3), la première surface principale (2) formant la surface d'entrée et la deuxième surface principale (3) la surface de sortie pour le rayonnement (5) à réfléchir,
- une pluralité de réflecteurs individuels (4) qui sont enrobés dans le support (1) et sont formés par des espaces creux (6) dans le support (1), le rayonnement (5) à réfléchir étant totalement réfléchi sur une partie des surfaces limites (7) de ces espaces creux (6) ou réfléchi sur des surfaces limites métallisées des espaces creux (6), et les espaces creux (6) étant entièrement entourés par le support (1),
**caractérisé en ce que**
le support (1) est formé d'une seule pièce au moins pour une partie du rayonnement à réfléchir le long du trajet optique depuis la surface d'entrée à la surface de sortie, de sorte que le trajet optique depuis la surface d'entrée à la surface de sortie est dépourvu de surfaces limites pour le rayonnement à réfléchir ou au moins des parties de celui-ci, à l'exception de la déviation au niveau des réflecteurs individuels.

2. Réflecteur taillé en facettes selon la revendication 1, **caractérisé en ce que** le rayonnement (5) à réfléchir est totalement réfléchi sur une partie des surfaces limites (7) de ces espaces creux (6).

3. Réflecteur taillé en facettes selon l'une des revendications précédentes, **caractérisé en ce que** les espaces creux (6) sont réalisés sous la forme de prismes.

4. Réflecteur taillé en facettes selon la revendication 3, **caractérisé en ce que** les arêtes des espaces creux (6) prismatiques individuels sont parallèles les unes aux autres.

5. Réflecteur taillé en facettes selon la revendication 3 ou 4, **caractérisé en ce que** les surfaces de base des prismes sont triangulaires.

6. Réflecteur taillé en facettes selon l'une des revendications 1 à 5, **caractérisé en ce que** les surfaces des réflecteurs individuels (4) sur lesquelles est réfléchi le rayonnement sont parallèles les unes aux autres.

7. Réflecteur taillé en facettes selon l'une des revendications précédentes, **caractérisé en ce que** le matériau utilisé pour le support (1) est une matière plastique transparente ou semi-transparente.

8. Arrangement de deux réflecteurs taillés en facettes selon l'une des revendications précédentes, **caractérisé en ce que** les deux premières surfaces principales (2) des deux réflecteurs taillés en facettes sont reliées en angle le long d'une arête.

9. Arrangement comprenant un réflecteur taillé en facettes selon l'une des revendications 1 à 7, **caractérisé en ce qu'**une source de lumière (8) est disposée sur le côté entrée du réflecteur taillé en facettes.

10. Arrangement selon la revendication 8, **caractérisé en ce qu'**une source de lumière (8) est disposée dans la zone intérieure de l'angle formé par les deux réflecteurs taillés en facettes.

11. Arrangement selon la revendication 9 ou 10, caractérisé en ce la source de lumière (8) utilisée est une diode électroluminescente ou une pluralité de diodes électroluminescentes.

12. Procédé de fabrication d'un réflecteur taillé en facettes selon l'une des revendications 1 à 7, **caractérisé par** les étapes suivantes :
- Mise à disposition d'un moule comprenant un évidement dans lequel pénètre une pluralité d'éléments en saillie en vue de former des espaces creux dans le réflecteur taillé en facettes,
- Remplissage de l'évidement avec une masse de moulage perméable au rayonnement en vue de former au moins une partie du support (1), la masse de moulage enrobant au moins partiellement les éléments en saillie,
- Durcissement de la masse de moulage pour obtenir le matériau support,
- Enlèvement du moule et
- Finalisation du support, de sorte que le matériau du support entoure complètement les espaces creux.

13. Procédé selon la revendication 12, **caractérisé en ce que** le moule est formé en deux parties.

14. Procédé selon la revendication 12 ou 13, **caractérisé en ce qu'**il s'agit d'un procédé de moulage par injection ou de pressage par injection.

15. Utilisation d'un arrangement selon l'une des revendications 9 à 11 comme marquage routier luminescent ou comme marquage de bord de voie de circulation.

16. Utilisation d'un arrangement selon l'une des revendications 9 à 11 comme éclairage de façade ou pour l'éclairage d'arêtes de bâtiment.
